# EUROPÄISCHE PATENTSCHRIFT

(11) **EP 3 948 649 B1**
(45) Veröffentlichungstag und Bekanntmachung des Hinweises auf die Patenterteilung: **08.10.2025**
(21) Anmeldenummer: 20711527.0
(22) Anmeldetag: 04.03.2020
(51) Int. Cl.: G06V 10/34, G06T 11/00, G06V 20/56, G06V 40/16, G06T 5/77

(54) **MASKIERUNG VON IN EINEM BILD ENTHALTENEN OBJEKTEN**
MASKING OF OBJECTS CONTAINED IN AN IMAGE
MASQUAGE D'OBJETS CONTENUS DANS UNE IMAGE

(30) Priorität: 01.04.2019 DE 102019204602
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: SCHOMERUS, Volker Patricio, 38100 Braunschweig (DE); FEI, Juncong, 76131 Karlsruhe (DE); RASHEED, Umair, 38440 Wolfsburg (DE)
(86) Internationale Anmeldenummer: PCT/EP2020/055756
(87) Internationale Veröffentlichungsnummer: WO 2020/200620

(56) Entgegenhaltungen:
- EP-A1- 2 876 605
- DE-A1- 102017 215 283
- US-A1- 2008 259 154
- US-A1- 2014 362 163

## Beschreibung

Die vorliegende Erfindung betrifft ein Verfahren zur Maskierung von in einem Bild enthaltenen Objekten, das insbesondere zur automatischen, aber anonymen Bildauswertung angewendet werden kann. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Für die Entwicklung automatischer Fahrfunktionen ist es notwendig, Sensordaten, insbesondere Kamerabilder, aufzunehmen, zu speichern und zu verarbeiten. Die Detektion und Klassifizierung diverser Objekte in den erfassten Kamerabildern, insbesondere von Fahrzeugen und Fußgängern, kann hierbei mit lernbasierten Verfahren realisiert werden.

Wenn die Kamerabilder Gesichter und Kfz-Kennzeichen enthalten, handelt es sich um personenbezogene Daten, was eine Weitergabe aus Datenschutzgründen erheblich einschränkt. Vor einer Weitergabe müssen diese Daten daher anonymisiert werden, d.h. Gesichter und Kfz-Kennzeichen müssen unkenntlich gemacht werden. Dieser Vorgang besteht aus zwei Schritten, der Detektion von Gesichtern und KFZ-Kennzeichen in den Kamerabildern und dem Unkenntlich Machen der entsprechenden Bildbereiche.

Die Entwicklung und das Testen von Systemen zur Detektion von Fußgängern und Fahrzeugen für das Automatische Fahren wird jedoch erschwert, wenn genau diese Objekte in den Daten unkenntlich gemacht wurden. Lernbasierte Verfahren wie künstliche neuronale Netzwerke, beispielsweise die im Bereich der Objektdetektion eingesetzten sogenannten "Deep Neural Networks", lernen das Erkennen von Objekten, z.B. Fußgängern, mit Hilfe einer großen Menge an Trainingsdaten, z.B. bei der Erkennung von Fußgängern durch die Verwendung von einer Vielzahl von Beispielbildern mit Fußgängern. Diese müssen möglichst realistisch aussehen, damit das eingesetzte System die Detektionsaufgabe erfolgreich lernen kann.

Die Detektion personenbezogener Bildbereiche wie Gesichter oder Kfz-Kennzeichen kann auf verschiedene Weisen erfolgen. So kann bei einer manuellen Detektion eine Person die einzelnen erfassten Bilder durchsuchen und die relevanten Bereiche markieren. Bei Videomaterial ist dieses Verfahren aber aufgrund der Vielzahl der erfassten Bilder sehr aufwendig.

Ebenso kann eine automatische Objekt-Detektion mit Hilfe künstlicher neuronaler Netzwerke erfolgen, bei der Begrenzungsrechtecke, sogenannte "Bounding Boxen", als Gesicht oder KFZ-Kennzeichen klassifiziere Bildbereiche begrenzen. Die detektierten rechteckigen Bereiche entsprechen hierbei jedoch so gut wie nie den wirklichen Objektkonturen, so dass im anschließenden zweiten Schritt i.d.R. mehr vom Bild unkenntlich gemacht wird als notwendig ist. Des Weiteren sind Methoden zur Objektdetektion i.d.R. so parametrierbar, dass man eine Balance herstellen kann zwischen "false positives" (es wurde ein Gesicht erkannt, obwohl sich in dem Bereich kein Gesicht befindet) und "false negatives" (ein existierendes Gesicht wurde nicht erkannt). Aus Datenschutzsicht möchte man möglichst alle Bereiche zuverlässig erkennen (möglichst wenige "false negatives"). Aus Sicht der weiteren Datenverarbeitungsschritte (Objekterkennung für automatische Fahrfunktionen) möchte man möglichst wenige Bildbereiche verfälschen, d.h. möglichst wenige "false positives".

Auch für das Unkenntlich Machen der detektierten Bildbereiche sind verschiedene Verfahren bekannt. So können die detektierten Bereiche mit einfarbigen, z.B. weißen oder schwarzen, Boxen oder Balken abgedeckt werden.

Ebenso kann ein Weichzeichnen oder "Blurring" der relevanten Bereiche erfolgen, bei dem die entsprechenden Bereiche künstlich "verwischt" werden, indem Pixelwerte eines Bildpunktes, d.h. die Farbwerte bzw. der Grauwert bei einem Grauwertbild, durch den Mittelwert der Pixelwerte mehrerer Bildpunkte in einer fest definierten Umgebung des Bildpunktes, z.B. in einem 5x5 Pixel großen Bildausschnitt ersetzt werden. Hierdurch werden Konturen und Kanten in dem entsprechenden Bereich abgeschwächt.

Auch kann ein "Verpixeln" der detektierten Bildbereiche durchgeführt werden, bei dem die Farbwerte aller Pixel innerhalb eines definierten Fensters durch einen gemeinsamen Wert, beispielsweise ihren Mittelwert, ersetzt werden. Dadurch wird in dem entsprechenden Bereich die Bildauflösung künstlich reduziert, da mehrere Pixel zu einem Pixel zusammengefasst werden.

Ein Videoüberwachungssystem, bei dem in einem Bild enthaltene Objekte, wie z.B. Kraftfahrzeug-Kennzeichen oder menschliche Gesichter, durch eine einfarbige Verdeckung maskiert und unter Angabe einer Legitimation wieder demaskiert werden können, wird in der US 7,825,950 B2 beschrieben.

Ebenso offenbart die WO 2009/061174 A1 für ein Mobile-Mapping-System zur Erfassung raumbezogener Daten von einem fahrenden Fahrzeug, dass von einem Bildsensor erfasste Kfz-Kennzeichen und menschliche Gesichter detektiert und unkenntlich gemacht werden. Hierfür können verschiedene Techniken wie eine Ersetzung des Gesichts oder Kfz-Kennzeichens oder Verpixelungsverfahren benutzt werden.

Ferner beschreibt die US 9,858,696 B2 ein Bildanonymisierungsverfahren, bei dem mehrere Elemente in einem Bild identifiziert und Eigenschaften dieser Elemente extrahieren werden. Ergibt eine Analyse, dass eine Kombination der Eigenschaften eine Identifikation einer Person oder eines Fahrzeugs ermöglicht, so werden die Elemente verdeckt, ersetzt, verwischt, oder auf andere Weise modifiziert, um durch die Modifizierung dieser Objekte eine Anonymisierung vorzunehmen.

Die Druckschrift DE 10 2017 215283 A1 beschreibt ein Verfahren zum Anonymisieren eines Bilds für ein Kamerasystem eines Kraftfahrzeugs durch Empfangen des Bilds, welches vorbestimmte Bildeigenschaften aufweist, Identifizieren eines zu anonymisierenden Bildbereichs in dem Bild, wobei der zu anonymisierenden Bildbereich ein Objekt abbildet, Bestimmen eines künstlichen Bildbereichs für den zu anonymisierenden Bildbereich, wobei der künstliche Bildbereich einen Typ des Objekts mit den Bildeigenschaften des Bilds beschreibt, und Ersetzen des zu anonymisierenden Bildbereichs durch den künstlichen Bildbereich zum Bereitstellen eines anonymisierten Bilds.

Die Druckschrift EP 2 876 605 A1 beschreibt ein Verfahren, das in digitalen Videoüberwachungssystemen zur Maskierung eines aus Pixeln zusammengesetzten Bildbereiches wie z.B. eines Gesichts oder eines Nummernschilds eingesetzt werden kann. Die Maskierung der Pixel erfolgt auf der Grundlage eines variablen Maskierungsgrades.

Die Druckschriften US 2014/362163 A1 und US 2008/259154 A1 offenbaren Maskierungsverfahren für Videokonferenzsysteme.

Es ist eine Aufgabe der Erfindung, ein verbessertes Verfahren und eine verbesserte Vorrichtung zur Maskierung sensibler Bildbereiche zur Verfügung zu stellen.

Diese Aufgabe wird durch ein Verfahren mit den Merkmalen des Anspruchs 1 sowie durch eine entsprechende Vorrichtung gemäß Anspruch 9 gelöst. Bevorzugte Ausgestaltungen der Erfindung sind Gegenstand der abhängigen Ansprüche.

Die Erfindung beruht zum einen auf der Erkenntnis, dass das Unkenntlich Machen von Bildbereichen zu einem Informationsverlust und einer Verfälschung der Objekteigenschaften führt. Würde z.B. auf Basis von Kamerabildern, in denen alle Gesichter durch weiße Boxen ersetzt wurden, ein System zur Detektion von Fußgängern trainiert werden, so würde dieses System lernen, immer dort einen Fußgänger zu erkennen, wo ein weißes Rechteck im Bild zu sehen ist, und damit in der Realität nicht funktionieren. Weiterhin wurde erkannt, dass lernbasierte Verfahren besonders sensitiv auf Kanten und Farbübergänge im Bild reagieren und einerseits bei den oben beschriebenen Verfahren zum Unkenntlich Machen Kanten, die eine Objektdetektion unterstützen, entfernt werden, andererseits hierdurch fälschlicherweise sogar neue Kanten im Bild generiert werden. Dies kann dazu führen, dass ein entsprechendes System lernt, auf falsche Merkmale zu reagieren. Dies gilt auch für das "Blurring" der betreffenden Bildbereiche, bei dem eine scharfe Kante zwischen dem geblurrten Bereich und dem Rest des Bildes entsteht.

Bei dem erfindungsgemäßen Verfahren zur Maskierung von in einem Bild enthaltenen Objekten
- werden Pixelwerte für die Pixel eines Bildes ermittelt;
- wird eine Bildmaske generiert, die mindestens einen ersten Bereich aufweist, in dem Pixel einer vorgegebenen Objektklasse angeordnet sind, und mindestens einen zweiten Bereich aufweist, in dem Pixel dieser vorgegebenen Objektklasse nicht angeordnet sind;
- wird für die Pixel in dem mindestens einen ersten Bereich die Distanz zum jeweils nächstliegenden Pixel in dem mindestens einen zweiten Bereich ermittelt;
- wird den Pixeln in dem mindestens einen ersten Bereich jeweils ein Fenster zugeordnet, das eine von der ermittelten Distanz abhängige Fenstergröße aufweist;
- wird aus den Pixelwerten der Pixel innerhalb des einem Pixel jeweils zugeordneten Fensters mindestens ein neuer Pixelwert für den jeweiligen Pixel ermittelt; und
- werden die ursprünglichen Pixelwerte der Pixel in dem mindestens einen ersten Bereich durch die jeweiligen neuen Pixelwerte ersetzt.

Auf diese Weise wird eine konturgenaue Detektion und Maskierung von Objekten vorgenommen, wobei durch eine distanzabhängige Maskierung an den Randbereichen dieser Objekte keine zusätzlichen Kanten oder Artefakte im Bild erzeugt werden. Damit ist es möglich, einerseits den Bestimmungen des Datenschutzes gerecht zu werden und nur anonymisierte Bilddaten weiterzugeben oder zu Analyse- und Testzwecken zu speichern, andererseits jedoch den Einfluss des Unkenntlich-Machens auf lernbasierte Methoden zu minimieren und damit beispielsweise eine Entwicklung zuverlässiger sicherheitskritischer Systeme zur Fußgänger- und Fahrzeug-Detektion zu ermöglichen.

Gemäß einer Ausführungsform der Erfindung gibt die ermittelte Distanz die Anzahl n der Pixel in dem ersten Bereich bis zum jeweils nächstliegenden Pixel in dem zweiten Bereich an, wobei die Fenstergröße n x n beträgt und das einem Pixel zugeordnete Fenster jeweils diesen Pixel und (n x n) -1 benachbarte Pixel umfasst.

Vorzugsweise entspricht hierbei für eine Distanz n=1 der neue Pixelwert eines Pixels dem ursprünglichen Pixelwert des Pixels, wobei für eine Distanz n>1 der neue Pixelwert aus den ursprünglichen Pixelwerten der n x n Pixel berechnet wird.

Besonders vorzugsweise wird hierbei für eine Distanz n>1 der neue Pixelwert aus einem Mittelwert der ursprünglichen Pixelwerte der n x n Pixel berechnet.

Insbesondere kann dann vorteilhafterweise für eine Distanz n=2 der neue Pixelwert des Pixels aus dem Mittelwert der ursprünglichen Pixelwerte des Pixels, des unmittelbar links daneben angeordneten Pixels, des unmittelbar darüber angeordneten Pixels und des Pixels, das sowohl unmittelbar über dem links daneben angeordneten Pixel als auch unmittelbar links neben dem darüber angeordneten Pixel angeordnet ist, berechnet werden.

Es erfolgt erfindungsgemäß eine konturgenaue Detektion personenbezogener Objekte und eine Anonymisierung dieser personenbezogenen Objekte durch die Maskierung.

Insbesondere können die personenbezogenen Objekte hierbei Kraftfahrzeug-Kennzeichen und/oder menschliche Gesichter sein.

Gemäß einer Ausführungsform der Erfindung werden Bilddaten, die personenbezogene Objekte beinhalten, an ein künstliches neuronales Netzwerk ausgegeben.

Erfindungsgemäß werden Bilddaten, die personenbezogene Objekte beinhalten, von einer Kamera eines autonom fahrenden Kraftfahrzeugs erfasst und ggf. im Kraftfahrzeug abgespeichert.

Entsprechend umfasst eine erfindungsgemäße Vorrichtung zur Maskierung von in einem Bild enthaltenen Objekten eine Kamera, die für die Pixel eines erfassten Bildes Pixelwerte an eine Bildbearbeitungseinheit ausgibt, wobei durch die Bildbearbeitungseinheit
- eine Bildmaske generiert wird, die mindestens einen ersten Bereich aufweist, in dem Pixel einer vorgegebenen Objektklasse angeordnet sind, und mindestens einen zweiten Bereich aufweist, in dem Pixel dieser vorgegebenen Objektklasse nicht angeordnet sind;
- für die Pixel in dem mindestens einen ersten Bereich die Distanz zum jeweils nächstliegenden Pixel in dem mindestens einen zweiten Bereich ermittelt wird;
- den Pixeln in dem mindestens einen ersten Bereich jeweils ein Fenster zugeordnet wird, das eine von der ermittelten Distanz abhängige Fenstergröße aufweist;
- aus den Pixelwerten der Pixel innerhalb des einem Pixel jeweils zugeordneten Fensters mindestens ein neuer Pixelwert für den jeweiligen Pixel ermittelt wird; und
- die ursprünglichen Pixelwerte der Pixel in dem mindestens einen ersten Bereich durch die jeweiligen neuen Pixelwerte ersetzt werden.

Die Erfindung betrifft auch ein Kraftfahrzeug, in dem das erfindungsgemäße Verfahren oder die erfindungsgemäße Vorrichtung eingesetzt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm eines erfindungsgemäßen Verfahrens zur Maskierung von in einem Bild enthaltenen Objekten;
- Fig. 2: zeigt schematisch die Berechnung der distanzabhängigen Maskierung an dem Beispiel zweier unterschiedlich angeordneter Bildpunkte;
- Fig. 3: zeigt an dem Beispiel des Hecks eines Kraftfahrzeugs eine Maskierung des Kfz-Kennzeichens mit einem weißen Balken (a), mit einem Balken mit einheitlich geblurrten Bildpunkten (b) und mit der erfindungsgemäßen distanzabhängigen Maskierung (c); und
- Fig. 4: zeigt schematisch für eine Straßenszene mit zwei Kraftfahrzeugen das Originalbild (a) mit erkennbaren Kfz-Kennzeichen, die hierfür erzeugte Binärmaske (b), das entsprechende Distanzfeld (c) sowie das anonymisierte Bild mit unkenntlich gemachten Kfz-Kennzeichen (d).

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

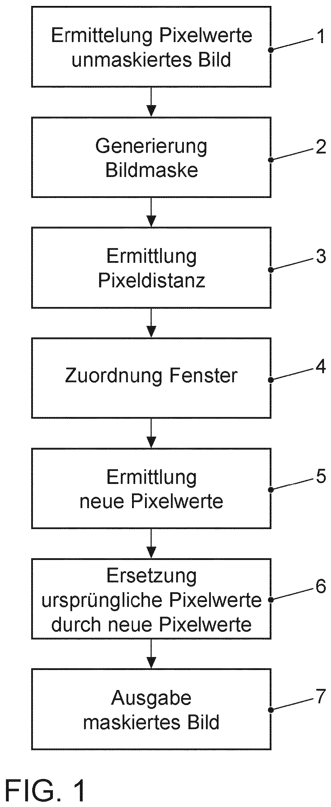

Figur 1 zeigt schematisch ein Ablaufdiagramm eines erfindungsgemäßen Verfahrens zur Maskierung von in einem Bild enthaltenen Objekten, das insbesondere zur automatischen, aber anonymen Bildauswertung angewendet werden kann. Die folgenden Erläuterungen beziehen sich hierbei auf ein einzelnes Bild, üblicherweise wird dieses aber Teil einer Bildfolge bzw. Videosequenz sein. Weiterhin wird hierbei beispielhaft die Detektion und Maskierung von Gesichtern und KFZ-Kennzeichen angegeben, das erfindungsgemäße Verfahren ist aber nicht hierauf beschränkt.

Gemäß Verfahrensschritt 1 werden zunächst Pixelwerte für die Pixel eines Bildes ermittelt. Hierfür kann insbesondere das Bild mit einem Bildsensor, der in eine Kamera integriert sein kann, erfasst werden, der für das Bild eine Vielzahl von Bildpunkten bzw. Pixel in einer rechteckigen Bildmatrix erzeugt. Hierbei kann das Bild als Farbbild vorliegen, beispielsweise als RGB-Signal, bei dem für die einzelnen Pixel jeweils für die drei Grundfarben Rot, Grün und Blau Farbwerte vorliegen. Ebenso kann das Bild als Grauwertbild vorliegen, wobei dann für die einzelnen Pixel jeweils ein Grauwert existiert. Durch den Bildsensor kann hierbei insbesondere sichtbares Licht, stattdessen oder zusätzlich aber auch infrarotes Licht erfasst werden. Ferner ist auch denkbar, die Signale von Sensoren, die nicht auf der Erfassung von Licht beruhen, aber eine ausreichende räumliche Auflösung haben, um datenschutzrelevante Informationen liefern zu können, erfindungsgemäß zu verarbeiten.

Im darauffolgenden Verfahrensschritt 2 erfolgt eine konturgenaue Detektion von Objekten in dem jeweiligen Bild mittels des sogenannten "Semantischen Pixel Labeling". Hierbei wird jeder Pixel des Bildes einer von mehreren vorgegebenen Objektklassen zugeordnet. So kann beispielsweise im Bereich des automatischen Fahrens herausgefunden werden, ob Bildpunkte zu Objektklassen wie "Auto", "Fahrbahn", "Fußgänger", "Radfahrer", "Autoinsasse", "Gebäude" gehören. Hierbei erfolgt eine Minimierung von "False Negatives", um möglichst kein relevantes Objekt zu verpassen, wobei "False Positives", d.h. die Erkennung von einem Objekt, obwohl an dieser Stelle keines vorliegt, in der Regel selten auftreten, und damit kaum verfälscht werden.

Für die Anonymisierung von Gesichtern und Kfz-Kennzeichen werden spezielle Objektklassen für die Teilobjekte "Gesicht" und "Kfz-Kennzeichen" verwendet, die für eine übliche Segmentierung für die Objekterkennung beim automatischen Fahren nicht verwendet werden. Hierbei kann in einem ersten Schritt zunächst eine Zuordnung der Pixel zu den üblichen Objektklassen "Auto", "Fußgänger", "Radfahrer", "Autoinsasse" erfolgen und in einem zweiten Schritt dann ein Teil der Pixel dieser Objektklassen einer der speziellen Objektklassen für "Gesicht" oder "Kfz-Kennzeichen" zugeordnet werden. Das Ergebnis dieser Detektion ist dann eine Bildmaske, die angibt, ob ein Pixel zu einem Gesicht oder KFZ-Kennzeichen gehört oder nicht. Die Bildmaske hat damit die Form eines binären Bildes, bei dem weiße Pixel bzw. Pixel mit einem ersten Binärwert, z.B. "1", angeben, dass das entsprechende Pixel des Bildes der Objektklasse für "Gesicht" oder "Kfz-Kennzeichen" zugeordnet ist und schwarze Pixel bzw. Pixel mit einem zweiten Binärwert, z.B. "0", angeben, dass das entsprechende Pixel des Bildes diesen Objektklassen nicht zugeordnet ist.

Im darauffolgenden Verfahrensschritt 3 wird mit einer Distanztransformation für jeden Pixel einer Klasse, im vorliegenden Beispiel der weißen Pixel der Bildmaske, die Distanz zum nächstgelegenen Pixel der anderen Klasse, im vorliegenden Beispiel der schwarzen Pixel der Bildmaske, berechnet. Auf diese Weise wird beispielsweise für jeden Pixel, der zu einem KFZ-Kennzeichen gehört, berechnet, wie viele Pixel er von einem Hintergrundpixel entfernt ist.

Daraufhin wird in Verfahrensschritt 4 den Pixeln der Objektklasse "Gesicht" oder "Kfz-Kennzeichen" jeweils ein Fenster zugeordnet. Es wird hierbei keine fest definierte Fenstergröße verwendet, vielmehr wird für jeden Pixel die Größe des Fensters in Abhängigkeit von der ermittelten Distanz gewählt. Die Fenstergröße wird hierbei so gewählt, dass für die darauffolgende Maskierung nur Pixelwerte der zu anonymisierenden Bereiche, nicht aber des Hintergrunds verwendet werden. Einem Pixel mit einer Distanz zum Hintergrund von n Pixeln wird hierbei vorzugsweise eine Fenstergröße von n x n Pixeln zugeordnet. So wird für einen Pixel, welcher genau am Rand eines zu anonymisierenden Bereiches liegt und damit eine Distanz zum Hintergrund von einem Pixel aufweist, eine Fenstergröße 1 x 1 gewählt, d.h. es erfolgt keine Veränderung der Farbwerte bzw. des Grauwert des Pixels. Ein Pixel mit einer Distanz zum Hintergrund von 2 Pixeln wird eine Fenstergröße von 2x2 Pixeln usw.

Im darauffolgenden Verfahrensschritt 5 werden dann basierend aus den Pixelwerten der in dem zugeordneten Fenster vorliegenden n x n Pixel neue Pixelwerte für den jeweiligen Pixel berechnet. Hierbei kann insbesondere der arithmetische Mittelwert der Pixelwerte der n x n Pixel berechnet werden. Ebenso kann aber beispielsweise auch der Median der Pixelwerte ermittelt werden. Auch kann es vorgesehen werden, nicht alle Pixelwerte innerhalb des betrachteten Fenster bei der Berechnung zu berücksichtigen oder eine unterschiedliche Wichtung vorzunehmen.

Die ursprünglichen Pixelwerte werden dann in Verfahrensschritt 6 durch die jeweiligen neuen Pixelwerte ersetzt und ggfs. in Verfahrensschritt 7 zur Weiterverarbeitung ausgegeben.

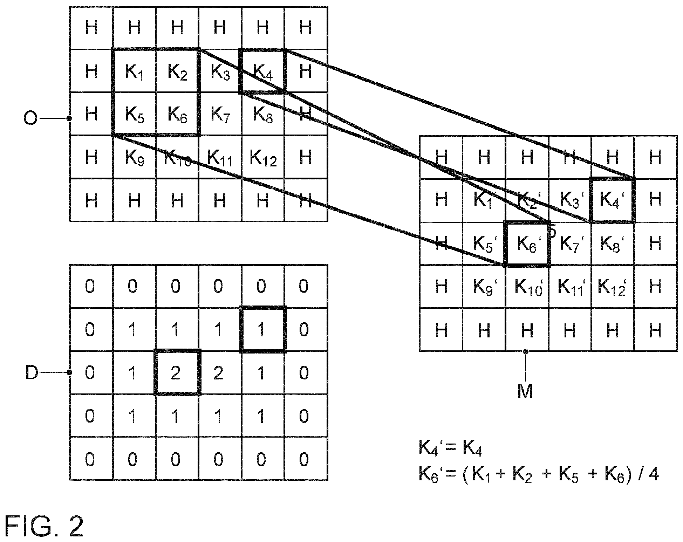

Figur 2 zeigt schematisch ein Beispiel für die erfindungsgemäße distanzabhängige Maskierung. Ein Originalbild O, das hier zur Vereinfachung nur fünf Bildzeilen mit jeweils sechs Pixeln bzw. Bildpunkten aufweist, gibt hierbei ein Kfz-Kennzeichen vor einem Hintergrund wieder. Die einzelnen Pixel des Kfz-Kennzeichens sowie ihre jeweiligen Pixelwerte werden hierbei mit Kᵢ bezeichnet und sind von den Hintergrund darstellenden Pixeln H umgeben.

Mit der oben erwähnten Distanztransformation ergibt sich dann das darunter dargestellte Distanzfeld D, welches für die einzelnen Pixel den Abstand zu dem nächstliegenden Hintergrundpixel angibt. Für das Pixel K₆ ergibt sich hierbei ein Abstand von zwei Pixeln, für das Pixel K₄ ein Abstand von einem Pixel. Entsprechend der ermittelten Distanz ergibt sich dann für die einzelnen Pixel die zu verwendende Fenstergröße, beispielsweise wird für das Pixel K₆ eine Fenstergröße von 2 x 2 Pixeln, für das Pixel K₄ eine Fenstergröße von einem Pixel gewählt.

Für die einzelnen Pixel des Kfz-Kennzeichens werden nun aus den aus den Pixelwerten der Pixel innerhalb des dem Pixel jeweils zugeordneten Fensters neue Pixelwerte Kᵢ' berechnet. Hierbei bleibt der Pixelwert für das Pixel K₄ aufgrund der Randlage unverändert, für das Pixel K₆ dagegen ergibt sich ein veränderter Pixelwert in Form des arithmetischen Mittels der Pixel K₁, K₂, K₅ und K₆. Auf diese Weise wird durch ein distanzabhängiges Blurring ein maskiertes Bild M erzeugt, das für eine Anonymisierung von personenbezogenen Bildbereichen genutzt werden kann, wobei die zu anonymisierenden Bereiche am Rand weniger als in der Mitte verändert werden.

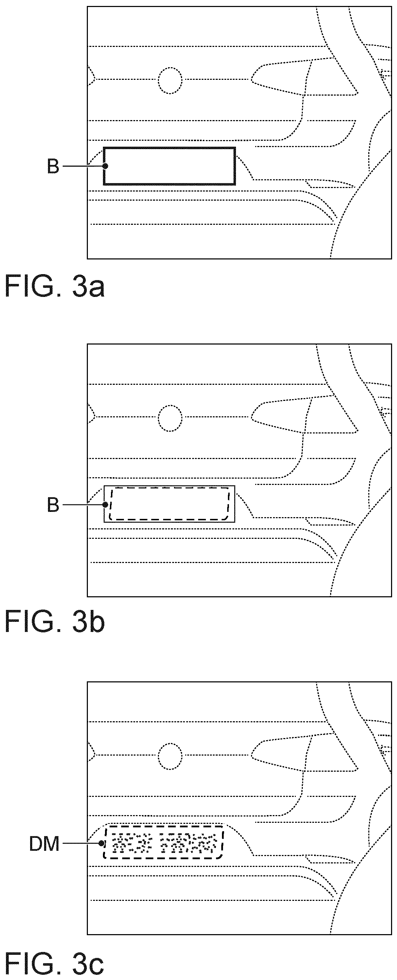

Dieses wird in Figur 3 an dem Beispiel eines am Heck eines Kraftfahrzeugs befindlichen Kfz-Kennzeichens veranschaulicht. Zum Vergleich ist in Figur 3a zunächst eine Maskierung des Kfz-Kennzeichens mit einem weißen Balken B dargestellt. In diesem Fall sind die ursprünglichen, äußeren Konturen des Kfz Kennzeichens nicht mehr zu erkennen. Stattdessen ist nun der Außenrand des überlagerten Balkens als neue scharfe Kante zwischen maskiertem Bildbereich und Hintergrund wahrzunehmen. Auch in Figur 3b wird dem Kfz Kennzeichen ein Balken zur Maskierung überlagert, wobei durch ein einheitliches Blurring der Bildpunkte zusätzlich erzeugte Kanten am Rand des Blurring-Bereiches zu erkennen sind. Bei der in Figur 3c dargestellten Maskierung (c), bei der eine konturgenaue Detektion des Kfz Kennzeichens mit einem distanzabhängigen Blurring mit unterschiedlichen Fenstergrößen durchgeführt wird, bleiben die ursprünglichen, äußeren Objektkonturen weitestgehend, wenn auch weichgezeichnet, erhalten, wobei gleichzeitig keine scharfen Kanten zwischen maskiertem Bildbereich und Hintergrund erzeugt werden.

Damit kann der negative Einfluss der Maskierung auf lernbasierte Objekt-Erkennungs-Methoden minimiert werden und insbesondere auch eine Weitergabe von so maskierten Bildern und Videosequenzen erfolgen. Auch die für die manuelle Sichtung der Daten zu Analyse- und Testzwecken ist diese Anonymisierungsmethode hilfreich, weil diese unauffällige Maskierung personenbezogener Bildbereiche nicht von den eigentlich zu analysierenden Bildbereichen ablenkt.

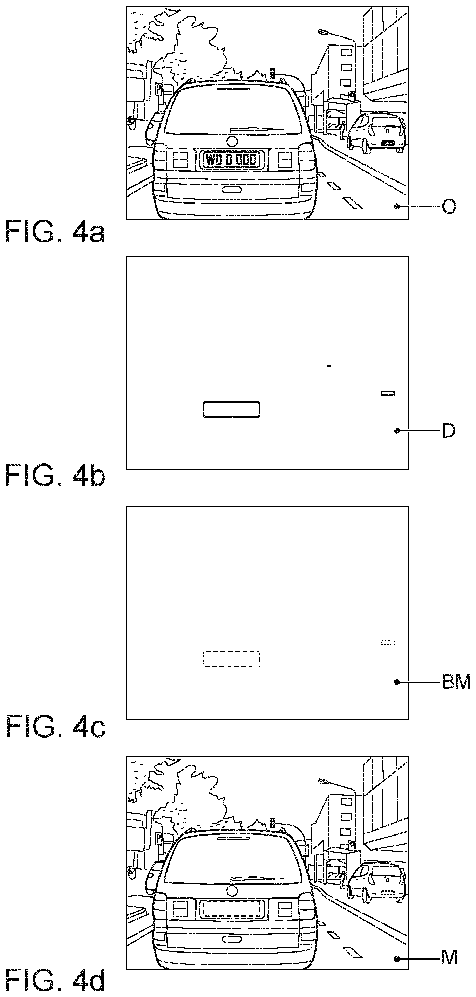

Zur weiteren Verdeutlichung ist in Figur 4 schematisch die erfindungsgemäße Bildverarbeitung einer Straßenszene mit zwei Kraftfahrzeugen dargestellt. In der Figur 4a ist hierbei zunächst das Originalbild gezeigt, bei dem zwei Kraftfahrzeuge mit jeweils erkennbarem Kfz-Kennzeichen zu sehen sind. Für dieses Originalbild wird die in Figur 4b dargestellte Binärmaske BM erzeugt, wobei die weißen Bildbereiche den Pixeln der dargestellten Kfz Kennzeichen entsprechen. Für diese Pixel ergibt sich durch die oben beschriebene Distanztransformation das in der Figur 4c gezeigte Distanzfeld. Basierend hierauf ergibt sich dann durch die distanzabhängige Wahl der Fenstergrößen und Mittelung der Pixelwerte innerhalb der jeweiligen Fenster das in Figur 4d die dargestellte anonymisierte Bild mit unkenntlich gemachten Kfz-Kennzeichen.

Die Erfindung kann insbesondere im Bereich des automatischen Fahrens eingesetzt werden, da dort das Aufnehmen, Speichern und Verarbeiten von Bilddaten notwendig ist, um eine sichere Fahrfunktion zu ermöglichen. Diese Daten werden benötigt, um Systeme für die Umfeldwahrnehmung zu entwickeln und zu testen, insbesondere, wenn hieran mehrere Parteien, wie beispielsweise Fahrzeughersteller, Zulieferer und/oder Forschungsunternehmen beteiligt sind.

Weiterhin kann es auch im Betrieb automatisch fahrender Fahrzeuge notwendig sein, entsprechende Daten aufzunehmen und zu speichern, um so beispielsweise die Beweisführung bei Rechtsstreitigkeiten nach Unfällen zu erleichtern. Auch für eine solche Anwendung wird eine entsprechende Anonymisierung der Bilddaten mit möglichst minimaler Verfälschung und damit möglichst minimalem Informationsverlust benötigt. Die Erfindung ist aber nicht auf diese Anwendungsfälle beschränkt, sondern kann auch in anderen Bereichen der automatischen, aber anonymen Bildauswertung verwendet werden.

### Bezugszeichenliste

- 1: Ermittlung Pixelwerte unmaskiertes Bild
- 2: Generierung Bildmaske
- 3: Ermittlung Pixeldistanz
- 4: Zuordnung Fenster
- 5: Ermittlung neue Pixelwerte
- 6: Ersetzung ursprüngliche Pixelwerte durch neue Pixelwerte
- 7: Ausgabe maskiertes Bild
- O: Originalbild
- D: Distanzfeld
- M: Maskiertes Bild
- Kᵢ: Pixel des Kfz-Kennzeichens
- H: Pixel des Hintergrunds
- BM: Binärmaske
- B: Balken zur Maskierung
- DM: distanzabhängige Maskierung

## Patentansprüche

1. Verfahren zur Maskierung von in einem Bild enthaltenen personenbezogenen Objekten, bei dem für eine Anonymisierung dieser personenbezogenen Objekte
- ein Bild, das ein oder mehrere personenbezogene Objekte beinhaltet, von einer Kamera eines Kraftfahrzeugs erfasst wird und Pixelwerte für die Pixel des erfassten Bildes ermittelt (1) werden;
- eine konturgenaue Detektion der einen oder mehreren personenbezogenen Objekte in dem Bild erfolgt und eine Bildmaske generiert (2) wird, die mindestens einen ersten Bereich aufweist, in dem Pixel eines personenbezogenen Objektes angeordnet sind, und mindestens einen zweiten Bereich aufweist, in dem keine Pixel eines personenbezogenen Objektes angeordnet sind; und
- die ursprünglichen Pixelwerte der Pixel des personenbezogenen Objektes durch jeweilige neue Pixelwerte ersetzt (6) werden;
**dadurch gekennzeichnet, dass**
- für die Pixel des personenbezogenen Objektes die Distanz zum jeweils nächstliegenden Pixel in dem mindestens einen zweiten Bereich ermittelt (3) wird;
- den Pixeln des personenbezogenen Objektes jeweils ein Fenster zugeordnet (4) wird, das eine von der ermittelten Distanz abhängige Fenstergröße aufweist; und
- bei der Ermittlung der jeweiligen neuen Pixelwerte aus den Pixelwerten der Pixel innerhalb des einem Pixel jeweils zugeordneten Fensters mindestens ein neuer Pixelwert für den jeweiligen Pixel ermittelt (5) wird.

2. Verfahren nach Anspruch 1, wobei die ermittelte Distanz die Anzahl n der Pixel in dem ersten Bereich bis zum jeweils nächstliegenden Pixel in dem zweiten Bereich angibt, die Fenstergröße n x n beträgt und das einem Pixel zugeordnete Fenster jeweils diesen Pixel und (n x n) -1 benachbarte Pixel umfasst.

3. Verfahren nach Anspruch 2, wobei für eine Distanz n=1 der neue Pixelwert eines Pixels dem ursprünglichen Pixelwert des Pixels entspricht und für eine Distanz n>1 der neue Pixelwert aus den ursprünglichen Pixelwerten der n x n Pixel berechnet wird.

4. Verfahren nach Anspruch 3, wobei für eine Distanz n>1 der neue Pixelwert aus einem Mittelwert der ursprünglichen Pixelwerte der n x n Pixel berechnet wird.

5. Verfahren nach Anspruch 4, wobei für eine Distanz n=2 der neue Pixelwert des Pixels aus dem Mittelwert der ursprünglichen Pixelwerte des Pixels, des unmittelbar links daneben angeordneten Pixels, des unmittelbar darüber angeordneten Pixels und des Pixels, das sowohl unmittelbar über dem links daneben angeordneten Pixel als auch unmittelbar links neben dem darüber angeordneten Pixel angeordnet ist, berechnet wird.

6. Verfahren nach einem der vorhergehenden Ansprüche, wobei die personenbezogenen Objekte Kraftfahrzeug-Kennzeichen und/oder menschliche Gesichter sind.

7. Verfahren nach einem der vorhergehenden Ansprüche, wobei die Bilddaten der erfassten Bilder an ein künstliches neuronales Netzwerk ausgegeben (7) werden.

8. Verfahren nach einem der vorhergehenden Ansprüche, wobei die Kamera in einem autonom fahrenden Kraftfahrzeug vorgesehen ist und die Bilddaten der erfassten Bilder im Kraftfahrzeug abgespeichert werden.

9. Vorrichtung zur Maskierung von in einem Bild enthaltenen personenbezogenen Objekten, mit einer Kraftfahrzeugkamera und einer Bildbearbeitungseinheit für eine Anonymisierung dieser personenbezogenen Objekte, wobei die Kraftfahrzeugkamera ein Bild, das ein oder mehrere personenbezogene Objekte beinhaltet, erfasst und für die Pixel des erfassten Bildes Pixelwerte an die Bildbearbeitungseinheit ausgibt, wobei durch die Bildbearbeitungseinheit
- eine konturgenaue Detektion der einen oder mehreren personenbezogenen Objekte in dem Bild erfolgt und eine Bildmaske generiert wird, die mindestens einen ersten Bereich aufweist, in dem Pixel eines personenbezogenen Objektes angeordnet sind, und mindestens einen zweiten Bereich aufweist, in keine Pixel eines personenbezogenen Objektes angeordnet sind; und
- die ursprünglichen Pixelwerte der Pixel des personenbezogenen Objektes durch jeweilige neue Pixelwerte ersetzt werden;
**dadurch gekennzeichnet, dass**
- für die Pixel eines personenbezogenen Objektes die Distanz zum jeweils nächstliegenden Pixel in dem mindestens einen zweiten Bereich ermittelt wird;
- den Pixeln eines personenbezogenen Objektes jeweils ein Fenster zugeordnet wird, das eine von der ermittelten Distanz abhängige Fenstergröße aufweist; und
- bei der Ermittlung der jeweiligen neuen Pixelwerte aus den Pixelwerten der Pixel innerhalb des einem Pixel jeweils zugeordneten Fensters mindestens ein neuer Pixelwert für den jeweiligen Pixel ermittelt wird.

10. Kraftfahrzeug, das eingerichtet ist, ein Verfahren gemäß einem der Ansprüche 1 bis 8 auszuführen oder eine Vorrichtung gemäß Anspruch 9 aufweist.

## Claims

1. Method for masking personal objects contained in an image, in which, for the anonymization of these personal objects,
- an image containing one or more personal objects is captured by a camera of a motor vehicle and pixel values are determined (1) for the pixels of the captured image;
- a contour-accurate detection of the one or more personal objects in the image takes place and an image mask is generated (2) which has at least one first region in which pixels of a personal object are arranged, and at least one second region in which no pixels of a personal object are arranged; and
- the original pixel values of the pixels of the personal object are replaced (6) by respective new pixel values;
**characterized in that**
- for the pixels of the personal object, the distance from the nearest pixel in the at least one second region is determined (3);
- a window is assigned (4) to each pixel of the personal object, which window has a window size that depends on the determined distance; and
- when the respective new pixel values are determined from the pixel values of the pixels within the window assigned to a pixel, at least one new pixel value is determined (5) for the relevant pixel.

2. Method according to claim 1, wherein the determined distance indicates the number n of pixels in the first region to the nearest pixel in the second region, the window size is n x n and the window assigned to a pixel comprises this pixel and (n x n) -1 neighboring pixels.

3. Method according to claim 2, wherein for a distance n=1 the new pixel value of a pixel corresponds to the original pixel value of the pixel and for a distance n>1 the new pixel value is calculated from the original pixel values of the n x n pixels.

4. Method according to claim 3, wherein for a distance n>1 the new pixel value is calculated from an average of the original pixel values of the n x n pixels.

5. Method according to claim 4, wherein for a distance n=2, the new pixel value of the pixel is calculated from the average of the original pixel values of the pixel, the pixel immediately to the left of it, the pixel immediately above it, and the pixel both immediately above the pixel to the left of it and immediately to the left of the pixel above it.

6. Method according to any of the preceding claims, wherein the personal objects are motor vehicle license plates and/or human faces.

7. Method according to any of the preceding claims, wherein the image data of the captured images are output (7) to an artificial neural network.

8. Method according to any of the preceding claims, wherein the camera is provided in an autonomously driving motor vehicle and the image data of the captured images are stored in the motor vehicle.

9. Device for masking personal objects contained in an image, comprising a motor vehicle camera and an image processing unit for anonymizing these personal objects, the motor vehicle camera capturing an image that contains one or more personal objects and outputting pixel values for the pixels of the captured image to the image processing unit, the image processing unit being used
- to perform a contour-accurate detection of the one or more personal objects in the image and to generate an image mask which has at least one first region in which pixels of a personal object are arranged, and at least one second region in which no pixels of a personal object are arranged; and
- to replace the original pixel values of the pixels of the personal object with respective new pixel values;
**characterized in that**
- for the pixels of a personal object, the distance from the nearest pixel in the at least one second region is determined;
- a window is assigned to each pixel of a personal object, which window has a window size that depends on the determined distance; and
- when the respective new pixel values are determined from the pixel values of the pixels within the window assigned to a pixel, at least one new pixel value is determined for the relevant pixel.

10. Motor vehicle which is configured to carry out a method according to any of claims 1 to 8 or has a device according to claim 9.

## Revendications

1. Procédé permettant le masquage d'objets à caractère personnel contenus dans une image, dans lequel, pour une anonymisation de ces objets à caractère personnel
- une image, qui contient un ou plusieurs objets à caractère personnel, est acquise par une caméra d'un véhicule automobile et des valeurs de pixels sont déterminées (1) pour les pixels de l'image acquise ;
- une détection aux contours précis des un ou plusieurs objets à caractère personnel dans l'image est effectuée et un masque d'image est généré (2), qui présente au moins une première zone, dans laquelle des pixels d'un objet à caractère personnel sont disposés, et présente au moins une seconde zone, dans laquelle aucun pixel d'un objet à caractère personnel n'est disposé ; et
- les valeurs de pixel originales des pixels de l'objet à caractère personnel sont remplacées (6) par de nouvelles valeurs de pixel respectives ;
**caractérisé en ce que**
- pour les pixels de l'objet à caractère personnel, la distance par rapport au pixel respectivement le plus proche dans l'au moins une seconde zone est déterminée (3) ;
- une fenêtre est respectivement associée (4) aux pixels de l'objet à caractère personnel, laquelle présente une taille de fenêtre qui dépend de la distance déterminée ; et
- lors de la détermination des nouvelles valeurs de pixel respectives à partir des valeurs de pixel des pixels à l'intérieur de la fenêtre respectivement associée auxdits pixels, au moins une nouvelle valeur de pixel est déterminée (5) pour le pixel respectif.

2. Procédé selon la revendication 1, dans lequel la distance déterminée indique le nombre n de pixels dans la première zone jusqu'au pixel respectivement le plus proche dans la seconde zone, la taille de la fenêtre est n x n et la fenêtre associée audit pixel comprend respectivement ce pixel et (n x n) -1 pixels voisins.

3. Procédé selon la revendication 2, dans lequel, pour une distance n=1, la nouvelle valeur de pixel d'un pixel correspond à la valeur de pixel initiale du pixel et, pour une distance n>1, la nouvelle valeur de pixel est calculée à partir des valeurs de pixel initiales des n x n pixels.

4. Procédé selon la revendication 3, dans lequel, pour une distance n>1, la nouvelle valeur de pixel est calculée à partir d'une valeur moyenne des valeurs de pixel initiales des n x n pixels.

5. Procédé selon la revendication 4, dans lequel, pour une distance n=2, la nouvelle valeur de pixel du pixel est calculée à partir de la valeur moyenne des valeurs de pixel originales du pixel, du pixel disposé immédiatement à gauche, du pixel disposé immédiatement au-dessus et du pixel qui est disposé à la fois immédiatement au-dessus du pixel disposé à gauche et immédiatement à gauche du pixel disposé au-dessus.

6. Procédé selon l'une des revendications précédentes, dans lequel les objets à caractère personnel sont des plaques d'immatriculation de véhicules automobiles et/ou des visages humains.

7. Procédé selon l'une des revendications précédentes, dans lequel les données d'image des images acquises sont délivrées (7) à un réseau neuronal artificiel.

8. Procédé selon l'une des revendications précédentes, dans lequel la caméra est prévue dans un véhicule automobile à conduite autonome et les données d'image des images acquises sont stockées dans le véhicule automobile.

9. Dispositif permettant le masquage d'objets à caractère personnel contenus dans une image, comportant une caméra de véhicule automobile et une unité de traitement d'image pour une anonymisation de ces objets à caractère personnel, dans lequel la caméra de véhicule automobile acquiert une image qui contient un ou plusieurs objets à caractère personnel et délivre des valeurs de pixels à l'unité de traitement d'image pour les pixels de l'image acquise, dans lequel par l'unité de traitement d'image
- une détection aux contours précis des un ou plusieurs objets à caractère personnel dans l'image est effectuée et un masque d'image est généré, lequel comprend au moins une première zone, dans laquelle des pixels d'un objet à caractère personnel sont disposés et au moins une seconde zone, dans laquelle aucun pixel d'un objet à caractère personnel n'est disposé ; et
- les valeurs de pixel originales des pixels de l'objet à caractère personnel sont remplacées par de nouvelles valeurs de pixel respectives ;
**caractérisé en ce que**
- pour les pixels d'un objet à caractère personnel, la distance par rapport respectivement au pixel le plus proche dans l'au moins une seconde zone est déterminée ;
- une fenêtre est respectivement associée aux pixels d'un objet à caractère personnel, laquelle fenêtre présente une taille qui dépend de la distance déterminée ; et
- lors de la détermination des nouvelles valeurs de pixel respectives à partir des valeurs de pixel des pixels à l'intérieur de la fenêtre respectivement associée audit pixel, au moins une nouvelle valeur de pixel est déterminée pour le pixel respectif.

10. Véhicule automobile qui est conçu pour mettre en œuvre un procédé selon l'une des revendications 1 à 8 ou présente un dispositif selon la revendication 9.
